# DEMANDE DE BREVET EUROPEEN

(11) **EP 2 199 896 A2**
(43) Date de publication de la demande: **23.06.2010**
(21) Numéro de dépôt: 09179493.3
(22) Date de dépôt: 16.12.2009
(51) Int. Cl.: G06F 3/048

(54) **Procédés de gestion d'un paramètre affiché dans un objet graphique interactif**

(30) Priorité: 16.12.2008 FR 0807058
(71) Demandeur: Thales, 92200 Neuilly Sur Seine (FR)
(72) Inventeur: Aymeric, Bruno, 33160, St Medard en Jalles (FR); Bonnet, Denis, 33000, Bordeaux (FR); Le Roux, Yannick, 33185, Le Haillan (FR); Viala, Joël, 31000 Toulouse (FR)
(74) Mandataire: Esselin, Sophie

(57) **Abrégé**

Le procédé de visualisation de la valeur précédente d'un paramètre affiché dans un premier objet graphique interactif au moyen d'un dispositif d'affichage définissant une fenêtre de visualisation, un calculateur permettant d'interpréter les actions d'un désignateur graphique, le désignateur comprenant des moyens de sélection du premier objet graphique, le désignateur pouvant se superposer au premier objet graphique sur le dispositif d'affichage, comprend :
■ une étape de positionnement du désignateur en au moins un point du cadre du premier objet graphique ;
■ une étape d'activation du moyen de sélection du premier objet graphique et de déplacement du désignateur dans une zone déterminée engageant le déplacement du premier objet graphique, un second objet graphique apparaissant sous le premier objet graphique, le second objet graphique comprenant la valeur précédente du paramètre en cours.

## Description

La présente invention concerne le domaine des systèmes d'affichage de cabine de pilotage. Plus particulièrement, l'invention concerne les systèmes d'affichage comportant plusieurs éléments interactifs, dits "objets graphiques interactifs".

Ces interactions sont en général réalisées à l'aide d'un désignateur informatique connus sous l'appellation anglo-saxonne de CCD, acronyme signifiant « Cursor Control Device » et dont une principale implémentation est la souris, et également selon la terminologie anglo-saxonne certaines implémentations plus connues sous les noms de touchpad, trackball et thumbsticks.

On sait que la fonction de ces désignateurs est de positionner un curseur sur les objets graphiques d'un écran de visualisation afin de les sélectionner, de les activer ou de les modifier.

Un problème majeur de ces moyens de désignations est qu'ils introduisent une latence à l'utilisation efficace des objets graphique interactifs, puisqu'ils nécessitent d'amener le curseur au-dessus de l'objet.

Dans le cadre de l'utilisation d'écran tactile, si on ne considère le curseur que comme un simple moyen d'interagir sur les objets, la présence de ce curseur devient a priori inutile.

Néanmoins, quel que soit le moyen utilisé pour interagir sur ces éléments graphiques, se pose le problème de l'annulation de la modification réalisée à un instant donné sur ces objets graphiques.

Les applications faisant intervenir de plus en plus d'éléments interactifs, la validation de l'intégrité des données validées, modifiées ou activées nécessitent une grande attention de la part d'un opérateur ou d'un pilote. Par ailleurs, la multiplication de ces éléments favorise les erreurs de saisie ou d'interprétation. L'opérateur ou le pilote doit alors pouvoir corriger ou vérifier une/des donnée(s) de la manière la plus simple possible.

Une fois qu'une nouvelle valeur d'un paramètre est validée et qu'elle est affichée dans un objet graphique interactif, il convient pour l'opérateur ou le pilote de pouvoir « voir » ou « retrouver » la valeur précédente de façon simple.

A l'heure actuelle, aucun système avionique interactif ne permet d'annuler simplement une modification effectuée sur un objet graphique interactif.

Dans le cadre des systèmes AIRBUS, en particulier sur l'A380 qui comprend des systèmes d'affichage comportant des objets graphiques interactifs, il n'est pas possible d'annuler directement sur les objets graphiques interactifs une modification réalisée par l'opérateur.

Dans le cadre des systèmes Honeywell / Dassault EASY, il n'est pas possible non plus d'annuler directement sur les objets graphiques interactifs une modification réalisée par l'opérateur.

Dans les systèmes informatiques actuels, l'annulation d'une action se fait au niveau de l'application, et non pas au niveau de chaque objet interactif. Cette architecture nécessite d'annuler alors toute la file des modifications avant d'arriver à la modification de l'action engagée sur un objet graphique en particulier.

L'invention permet de pallier aux inconvénients précités.

L'invention comprend la mise en oeuvre d'une interaction intuitive sur chaque objet graphique interactif affiché dans une application. L'objet graphique comprend alors l'affichage d'au moins un paramètre. L'invention permet de sélectionner l'objet graphique interactif et de le déplacer en dehors de sa position initiale. L'opérateur voit alors apparaître en dessous une réplique de l'objet graphique, mais avec la valeur précédente du paramètre. Un lien est alors crée entre l'objet graphique déplacé et la réplique de l'objet graphique de manière à revenir à une position initiale.

Si l'opérateur déplace l'objet interactif suffisamment loin de sa position initiale, le lien entre les deux objets interactifs se rompt et l'objet graphique déplacé disparaît, laissant en place la réplique de l'objet graphique comprenant la valeur précédente du paramètre.

Si l'opérateur déplace l'objet graphique dans une zone déterminée suffisamment proche de la réplique de l'objet graphique, et qu'il relâche l'objet, alors l'objet graphique reprend sa place initiale. L'annulation de la valeur du paramètre n'est pas prise en compte.

L'invention propose un procédé de consultation d'une valeur contenu dans l'historique de l'objet graphique interactif et un procédé d'annulation de la dernière action effectuée sur un objet graphique interactif.

L'équipage dispose alors d'un moyen de consulter un historique des valeurs spécifiées dans chacun des objets graphiques interactifs, et peut intuitivement revenir à ces valeurs.

Il ne s'agit pas simplement d'un procédé d'annulation de la dernière action, mais de la dernière action sur chaque objet graphique interactif.

Avantageusement, le procédé de gestion d'un paramètre affiché dans un premier objet graphique interactif au moyen d'un dispositif d'affichage, ledit premier objet graphique comprenant une apparence délimitée par un cadre, un comportement et une interface fonctionnelle, un calculateur permettant d'interpréter les actions d'un désignateur graphique, le désignateur comprenant des moyens de sélection du premier objet graphique, le désignateur pouvant se superposer au premier objet graphique sur le dispositif d'affichage, comprend :
■ une première étape de positionnement du désignateur en au moins un point du cadre du premier objet graphique ;
■ une seconde étape d'activation du moyen de sélection du premier objet graphique et de déplacement du désignateur dans une zone déterminée de la fenêtre de visualisation, le déplacement du désignateur engageant le déplacement du premier objet graphique, un second objet graphique apparaissant dans la position initiale du premier objet graphique, le second objet graphique comprenant un historique du paramètre.

Avantageusement, la seconde étape comprend l'affichage d'au moins un lien graphique formant un trait joignant le premier et le second objet graphique dont l'épaisseur diminue en fonction de l'éloignement du premier objet graphique de sa position initiale.

Avantageusement, une troisième étape comprend un relâchement de la sélection du premier objet graphique dans la zone déterminée, le premier objet graphique revenant à sa position initiale de manière à se superposer au second objet graphique.

Avantageusement, une troisième étape comprend un relâchement de la sélection du premier objet graphique en dehors de la zone déterminée, le premier objet graphique disparaissant, le second objet graphique comprenant alors la précédente valeur courante du paramètre.

Avantageusement, l'historique comprend une pile comportant un nombre prédéfini des dernières valeurs du paramètre, la valeur comprise dans l'objet graphique venant d'être supprimé étant enregistrée en queue de pile.

Avantageusement, le désignateur est un doigt et le dispositif d'affichage un écran tactile, le moyen de sélection étant un contact entre le doigt et l'écran lorsque le doigt est superposé à l'objet graphique, le déplacement de l'objet graphique étant assuré par un déplacement du doigt sur l'écran.

Avantageusement, le désignateur est une souris, les moyens de sélection un contact du curseur de la souris et d'un click maintenu de la souris.

Avantageusement, le désignateur peut être un touchpad, un trackball ou un thumbsticks.

D'autres caractéristiques et avantages de l'invention apparaîtront à l'aide de la description qui suit, faite en regard des dessins annexés qui représentent :
- la figure 1 : un objet graphique affiché sur un écran dont la sélection s'opère par un contact tactile ;
- la figure 2 : un déplacement de l'objet graphique sélectionné dans une zone déterminée à une première distance ;
- la figure 3 : un déplacement de l'objet graphique sélectionné dans une zone déterminée à une seconde distance ;
- la figure 4 : un relâchement de la sélection de l'objet graphique en dehors de la zone déterminée.

On appelle dans la suite de la description un objet graphique interactif, un objet comportant :
■ une apparence, c'est-à-dire un aspect graphique ;
■ un comportement, c'est-à-dire une réaction aux stimuli générés par l'action d'un utilisateur ;
■ une interface fonctionnelle, c'est-à-dire l'envoi d'un évènement, d'une commande ou d'un texte, éventuellement à un calculateur.

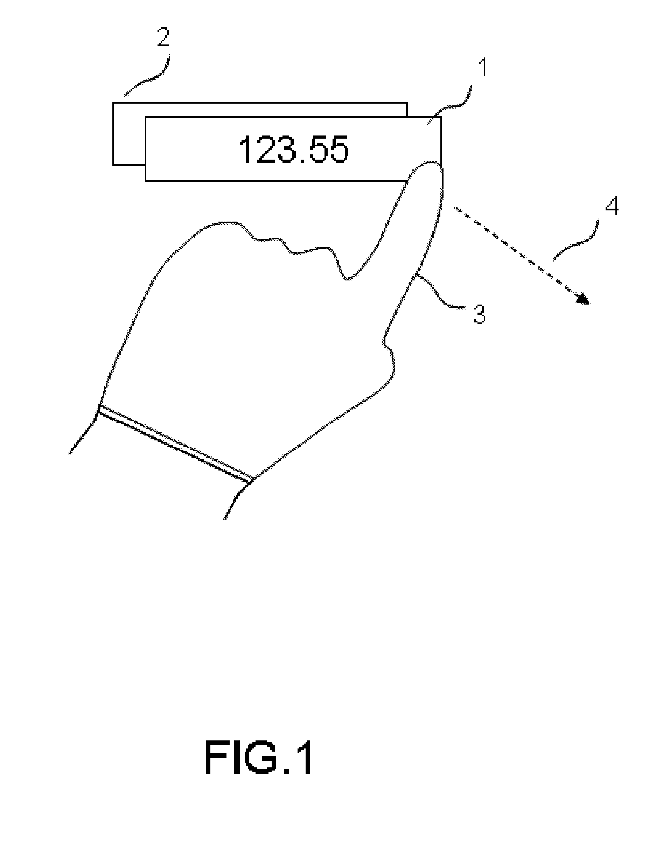

La figure 1 représente un mode de réalisation comprenant un écran tactile affichant des objets graphiques interactifs. Un objet graphique interactif 1 est représenté affichant la valeur d'un paramètre en cours 123.55. Le doigt 3 d'un opérateur en contact avec l'écran, lorsque ce dernier est superposé à l'objet graphique, peut le sélectionner et le déplacer selon une direction 4 de son choix. L'objet graphique lorsqu'il est déplacé laisse une réplique 2 de l'objet graphique interactif comprenant la valeur précédente du paramètre en cours.

L'invention s'applique à un ensemble d'objets graphiques interactifs rassemblés dans une même fenêtre d'un dispositif d'affichage. Chaque objet graphique interactif comprend un historique de valeurs des paramètres affichés. Il est alors possible de consulter la valeur précédente d'un paramètre après que ce dernier a été modifié.

L'action de sélectionner et de déplacer un objet graphique interactif n'a aucune influence sur les autres objets graphiques affichés dans la fenêtre.

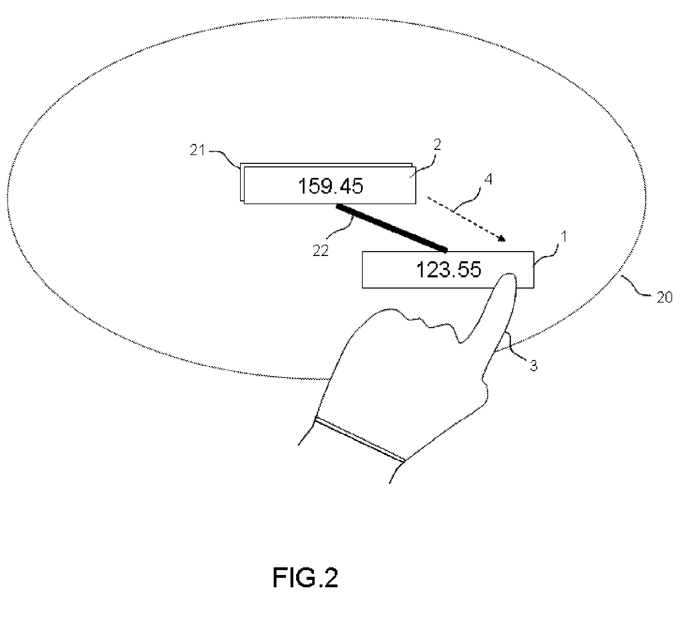

La figure 2 représente l'objet graphique interactif lorsqu'il déplacé par l'action d'un opérateur en laissant glisser son doigt sur l'écran selon une direction 4. L'opérateur peut alors consulter la valeur précédente du paramètre compris dans l'objet graphique interactif répliqué 2, ce dernier apparaissant dans la position initiale de l'objet graphique interactif tel qu'affiché dans son mode nominal. Dans l'exemple de la figure 2, la valeur de ce dernier paramètre est 159.45.

L'objet graphique interactif 2 comporte un paramètre ayant un nouvel historique 21.

Un mode de réalisation permet d'afficher un lien 22, par exemple représenté par une droite reliant l'objet graphique interactif 1 et sa réplique 2. Avantageusement le lien 22 comprend une épaisseur variant avec l'éloignement de l'objet graphique interactif déplacé 1.

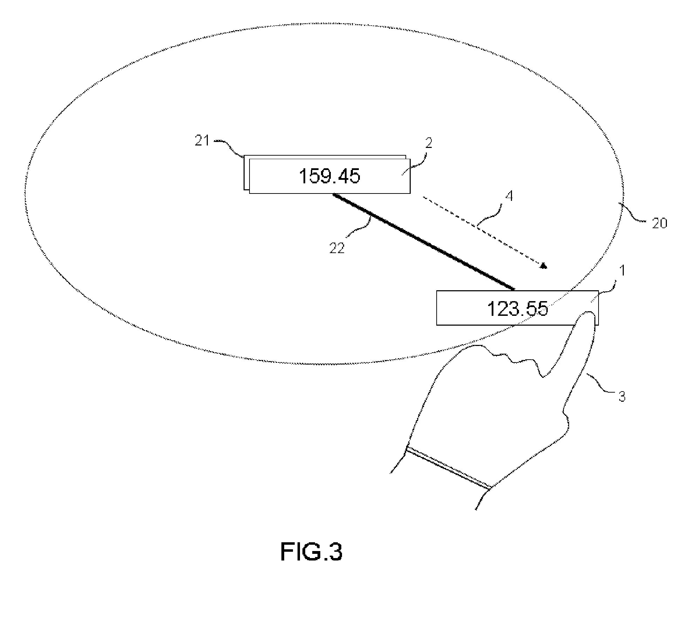

La figure 3 représente l'objet graphique interactif déplacé 1 plus éloigné que sur la figure 2. L'épaisseur du lien 22 est plus faible que l'épaisseur du lien 22 de la figure 2.

Avantageusement, l'épaisseur du lien 22 se réduisant à mesure de l'éloignement, un manipulateur de l'objet graphique comprend intuitivement que le lien entre l'objet déplacé 1 et l'objet répliqué 2 est susceptible de se rompre.

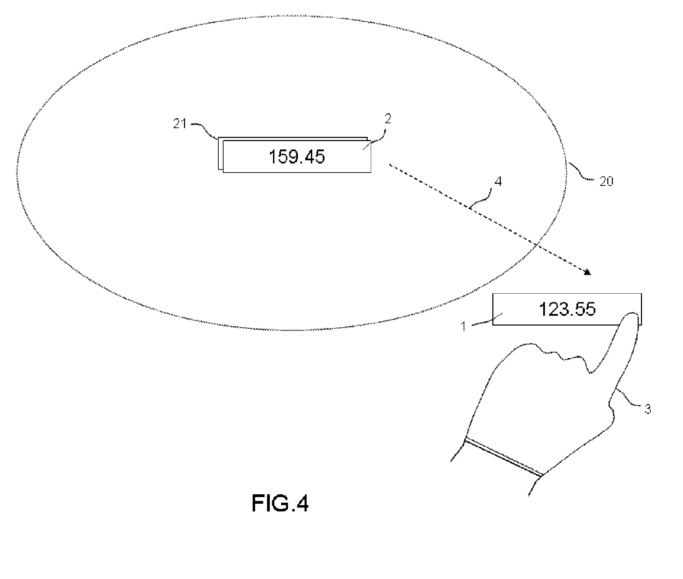

L'invention permet de définir une zone déterminée 20 au-delà de laquelle les deux objets graphiques interactifs, l'objet déplacé 1 et l'objet répliqué 2, n'ont plus de lien entre eux, comme illustré sur la figure 4. Lorsque l'objet graphique interactif franchi la zone 20, la valeur courante comprise dans ce dernier est annulée et le nouvel affichage courant de la fenêtre comprend l'objet graphique répliqué comportant la valeur précédente du paramètre affiché.

Un intérêt de la représentation du lien 22 est de permettre à l'opérateur de guider son action sans devoir représenter graphiquement la zone déterminée 20. En effet, l'épaisseur du lien 22 diminue avec l'éloignement de l'objet graphique déplacé 1, de sa position initiale, jusqu'à rompre si ce dernier est déplacé suffisamment loin.

En revanche, si l'objet n'est pas déplacé au-delà de la zone déterminée 20 tel que représenté sur les figures 2 ou 3, un relâchement de la sélection de l'objet graphique interactif 1 a pour effet de le repositionner dans sa position initiale correspondant à un état de mode nominal d'affichage.

Dans un autre mode de réalisation, la sélection d'un objet graphique peut être réalisée au moyen d'une souris, d'un touchpad, d'un trackball ou d'un thumbsticks, selon les terminologies courantes employées.

Selon les modes de réalisation, l'invention permet de garder un historique 21 du paramètre définissant une liste des dernières valeurs modifiées.

La liste est une pile comportant un nombre prédéfini des dernières valeurs du paramètre. Avantageusement, la valeur comprise dans l'objet graphique venant d'être supprimé est enregistrée en queue de pile.

Dans un mode particulier de réalisation, la pile comporte seulement deux éléments. Ce mode de réalisation permet, lorsqu'une valeur vient d'être supprimée par le déplacement d'un objet graphique en dehors de la zone déterminée, de le retrouver facilement en ré-effectuant la manipulation sur l'objet graphique répliqué, en le sortant à son tour par le procédé de l'invention de la zone déterminée.

Dans le cadre d'une interaction à l'aide d'un curseur graphique, le procédé, selon l'invention, de visualisation de la valeur précédente comprend les étapes suivantes :
■ le positionnement du curseur graphique en un point de sélection situé sur le cadre de l'objet graphique interactif ;
■ l'activation du moyen de sélection, et le déplacement du curseur graphique en dehors de l'objet graphique interactif, la valeur précédente apparaissant ;
■ le relâchement de la sélection dans une zone déterminée permettant à l'objet de revenir à sa position initiale, avec la valeur courante.

Dans le cadre des interactions tactiles, le procédé, selon l'invention, de visualisation de la valeur précédente comprend les étapes suivantes :
■ le positionnement du doigt de l'opérateur en un point de sélection situé sur le cadre de l'objet graphique interactif ;
■ le déplacement du doigt toujours en contact avec l'écran, en dehors de l'objet graphique interactif, la valeur précédente apparaissant ;
■ le soulèvement du doigt de l'écran dans une zone déterminée, laissant l'objet graphique revenir à sa position initiale, avec la valeur courante.

Dans le cadre d'une interaction à l'aide d'un curseur graphique, le procédé, selon l'invention, d'annulation de la valeur d'un paramètre affiché en vue de revenir à sa valeur précédente comprend les étapes suivantes :
■ le positionnement du curseur graphique en un point de sélection situé sur le cadre de l'objet graphique interactif ;
■ l'activation du moyen de sélection, et le déplacement du curseur graphique en dehors d'une zone déterminée située autour de l'objet graphique interactif, la valeur précédente apparaissant ;
■ le relâchement de la sélection en dehors de la zone déterminée, l'objet déplacé disparaissant et l'objet répliqué restant dans la position initiale avec la précédente valeur.

Dans le cadre d'une interaction tactile, le procédé, selon l'invention, d'annulation de la valeur d'un paramètre affiché en vue de revenir à sa valeur précédente comprend les étapes suivantes :
■ le positionnement du doigt de l'opérateur en un point de sélection situé sur le cadre de l'objet graphique interactif ;
■ le déplacement du doigt toujours en contact avec l'écran, en dehors de la zone déterminée, la valeur précédente apparaissant.
■ Le soulèvement du doigt de l'écran en dehors de la zone déterminée, l'objet déplacé disparaissant et l'objet répliqué restant dans la position initiale avec la précédente valeur.

Avantageusement la solution proposée apporte donc les bénéfices suivant :
■ La réduction de l'effort de l'opérateur pour mémoriser le moyen d'annuler, l'action d'annulation devenant intuitive ;
■ Faciliter la consultation la valeur précédente sur chaque objet graphique interactif ;
■ Faciliter l'annulation de la dernière modification sur chaque objet graphique interactif.

## Revendications

1. Procédé de gestion d'un paramètre affiché dans un premier objet graphique interactif (1) au moyen d'un dispositif d'affichage, ledit premier objet graphique (1) comprenant une apparence délimitée par un cadre, un comportement et une interface fonctionnelle, un calculateur permettant d'interpréter les actions effectuées par un utilisateur au moyen d'un désignateur graphique (3), le désignateur (3) comprenant des moyens de sélection du premier objet graphique (1), le désignateur (3) pouvant se superposer au premier objet graphique (1) sur le dispositif d'affichage, **caractérisé en ce que** procédé comprend :
■ une première étape de positionnement du désignateur en au moins un point du cadre du premier objet graphique ;
■ une seconde étape d'activation des moyens de sélection du premier objet graphique et de déplacement du désignateur (3) dans une zone déterminée (20) de la fenêtre de visualisation, le déplacement du désignateur engageant le déplacement du premier objet graphique (1), un second objet graphique (2) apparaissant dans la position initiale du premier objet graphique, le second objet graphique (2) comprenant un historique du paramètre.

2. Procédé de gestion d'un paramètre affiché dans un premier objet graphique interactif selon la revendication 1, **caractérisé en ce que** la seconde étape comprend l'affichage d'au moins un lien graphique (22) formant un trait joignant le premier (1 ) et le second (2) objet graphique dont l'épaisseur diminue en fonction de l'éloignement du premier objet graphique de sa position initiale.

3. Procédé de gestion d'un paramètre affiché dans un premier objet graphique interactif selon la revendication 2, **caractérisé en ce qu'**une troisième étape comprend un relâchement de la sélection du premier objet graphique dans la zone déterminée (20), le premier objet graphique (1) revenant à sa position initiale de manière à se superposer au second objet graphique (2).

4. Procédé de gestion d'un paramètre affiché dans un premier objet graphique interactif selon la revendication 2, **caractérisé en ce qu'**une troisième étape comprend un relâchement de la sélection du premier objet graphique (1) en dehors de la zone déterminée (20), le premier objet graphique (1) disparaissant, le second objet graphique (2) comprenant alors la précédente valeur courante du paramètre.

5. Procédé de gestion d'un paramètre affiché dans un premier objet graphique interactif selon la revendication 4, **caractérisé en ce que** l'historique comprend une pile comportant un nombre prédéfini des dernières valeurs du paramètre, la valeur comprise dans l'objet graphique venant d'être supprimé étant enregistrée en queue de pile.

6. Procédé de gestion d'un paramètre affiché dans un premier objet graphique interactif selon l'une quelconque des revendications 3 à 5, **caractérisé en ce que** le désignateur est un doigt et le dispositif d'affichage un écran tactile, les moyens de sélection étant un contact entre le doigt et l'écran lorsque le doigt est superposé à l'objet graphique, le déplacement de l'objet graphique étant assuré par un déplacement du doigt sur l'écran.

7. Procédé de gestion d'un paramètre affiché dans un premier objet graphique interactif l'une quelconque des revendications 3 à 5, **caractérisé en ce que** le désignateur est une souris et les moyens de sélection sont un contact du curseur de la souris et d'un click maintenu de la souris.

8. Procédé de gestion d'un paramètre affiché dans un premier objet graphique interactif l'une quelconque des revendications 3 à 5, **caractérisé en ce que** le désignateur est un touchpad.

9. Procédé de gestion d'un paramètre affiché dans un premier objet graphique interactif l'une quelconque des revendications 3 à 5, **caractérisé en ce que** le désignateur est trackball.

10. Procédé de gestion d'un paramètre affiché dans un premier objet graphique interactif l'une quelconque des revendications 3 à 5, **caractérisé en ce que** le désignateur est thumbsticks.
